# EUROPÄISCHE PATENTSCHRIFT

(11) **EP 3 582 988 B1**
(45) Veröffentlichungstag und Bekanntmachung des Hinweises auf die Patenterteilung: **04.01.2023**
(21) Anmeldenummer: 18707661.7
(22) Anmeldetag: 16.02.2018
(51) Int. Cl.: B60K 1/00, B60K 7/00, B60K 1/04, B60K 11/02, B60K 17/04, B60K 23/04, B60L 1/02, B60T 1/06, B60T 1/10, B60T 5/00, F16D 65/853, F16D 121/24, H02J 50/10

(54) **ACHSANTRIEBSEINHEIT MIT INDUKTIVEM LADEEMPFÄNGER, ANTRIEBSACHSE UND KRAFTFAHRZEUG**
AXLE DRIVE UNIT WITH INDUCTIVE CHARGING RECEIVER, DRIVE AXLE AND MOTOR VEHICLE
UNITÉ D'ENTRAÎNEMENT D'ESSIEU COMPRENANT UN RÉCEPTEUR DE CHARGE INDUCTIF, ESSIEU MOTORISÉ ET VÉHICULE AUTOMOBILE

(30) Priorität: 20.02.2017 DE 102017103401; 20.02.2017 DE 102017103397; 20.02.2017 DE 102017103399; 20.02.2017 DE 102017103400
(43) Veröffentlichungstag der Anmeldung: 25.12.2019
(73) Patentinhaber: Jheeco E-Drive AG, 9492 Eschen (LI)
(72) Erfinder: MATT, Philipp, 6820 Frastanz (AT)
(74) Vertreter: Grünecker Patent- und Rechtsanwälte PartG mbB
(86) Internationale Anmeldenummer: PCT/EP2018/053958
(87) Internationale Veröffentlichungsnummer: WO 2018/150010

(56) Entgegenhaltungen:
- EP-A1- 2 849 314
- EP-A2- 1 503 481
- EP-A2- 2 546 092
- WO-A1-2011/076534
- DE-A1-102012 025 371
- DE-A1-102014 203 037
- DE-A1-102015 206 365
- DE-A1-102015 212 811

## Beschreibung

Die Erfindung betrifft eine Achsantriebseinheit mit den Merkmalen des Oberbegriffs des Anspruchs 1. Eine derartige Achsantriebseinheit ist beispielsweise aus WO 2016/116104 A1 bekannt. Die Erfindung betrifft ferner eine Antriebsachse für ein Kraftfahrzeug und ein Kraftfahrzeug.

Mit Blick auf die zukünftigen Mobilitätsbedürfnisse stehen der Automobilindustrie im Zusammenhang mit der Elektrifizierung des Fahrantriebs bedeutende technologische Änderungen bevor. Gerade die gesetzlichen Rahmenbedingungen zur Begrenzung der Schadstoffemissionen sowie des CO₂-Ausstoßes erfordern neue Konzepte. Bspw. dürfen ab dem Jahr 2021 Personenkraftfahrzeuge in Europa durchschnittlich nur noch 95g CO₂/km emittieren. Die zunehmende Elektrifizierung des Antriebsstranges spielt bei der Einhaltung dieser Grenze ebenso wie bei der Einhaltung anderer Emissionsgrenzen eine wichtige Rolle. Aus der eingangs genannten WO 2016/116104 A1 ist eine Achsantriebseinheit mit einem Elektromotor und einem Getriebe bekannt. Bei dieser bekannten Achsantriebseinheit sollen durch das Getriebe der Schaltkomfort und Wirkungsgrad der Einheit verbessert werden. Dazu weist das Getriebe zwei Schaltstufen mit einem Zwischengetriebe auf, das über eine stufenlose Übersetzung verfügt. Außerdem umfasst die bekannte Achsantriebseinheit eine integrierte elektromechanische Parksperre. Aufgrund des Zwischengetriebes ist die bekannte Achsantriebseinheit konstruktiv aufwändig und relativ schwer, so dass das Gewicht des Antriebsstranges erhöht wird.

Weitere Achsantriebseinheiten sind aus der EP 1 503 481 A2 und der DE 10 2015 212 811 A1 bekannt.

Der Erfindung liegt die Aufgabe zu Grunde, eine Achsantriebseinheit anzugeben, mit deren Hilfe der Antriebsstrang eines Kraftfahrzeugs möglichst einfach und gewichtssparend aufgebaut werden kann. Der Erfindung liegt ferner die Aufgabe zu Grunde, eine Antriebsachse und ein Kraftfahrzeug anzugeben.

Erfindungsgemäß wird diese Aufgabe mit Blick auf die Achsantriebseinheit durch den Gegenstand des Anspruchs 1, mit Blick auf die Antriebsachse durch den Gegenstand des Anspruchs 12 und mit Blick auf das Kraftfahrzeug durch den Gegenstand des Anspruchs 13 gelöst.

Die Erfindung beruht auf dem Gedanken, eine Achsantriebseinheit für ein elektrisch antreibbares Kraftfahrzeug anzugeben, das wenigstens eine Antriebsachse aufweist. Die Achsantriebseinheit weist wenigstens einen Elektromotor zur Erzeugung eines Antriebsmomentes und wenigstens ein Getriebe zur Übertragung des Antriebsmomentes auf die Antriebsachse auf. Der Elektromotor und das Getriebe bilden eine Baueinheit. Die Erfindung zeichnet sich dadurch aus, dass eine Leistungselektronik und ein induktiver Ladeempfänger für ein Batteriesystem in die Baueinheit integriert sind. Hierbei ist die Leistungselektronik mit dem induktiven Ladeempfänger elektrisch verbunden und derart angepasst, eine in den induktiven Ladeempfänger induzierbare Wechselspannung gleichzurichten.

Im Rahmen der Erfindung ist die Leistungselektronik zusätzlich zu dem Elektromotor und dem Getriebe in die aus diesen Komponenten aufgebaute, d.h. in ein- und dieselbe Baueinheit integriert. Die Leistungselektronik ist derart angepasst, den wenigstens einen Elektromotor der Achsantriebseinheit mit Strom zu versorgen und zusätzlich vorzugsweise zu steuern.

Außerdem ist als weitere Komponente zusätzlich zur Leistungselektronik ein induktiver Ladeempfänger in die Baueinheit integriert. Die Baueinheit bildet eine physische Einheit, in der die vorstehend genannten Komponenten als eine Baugruppe zusammenfasst sind. Die Baueinheit ist als Ganzes handhabbar, bspw. beim Zusammenbau der Antriebsachse als Ganzes montierbar. Im eingebauten Zustand bildet die Baueinheit die Schnittstelle zu anderen, außerhalb der Baueinheit angeordneten Bauteilen des Kraftfahrzeugs, mit denen die einzelnen Komponenten der Baueinheit interagieren, bspw. eine Traktionsbatterie des Kraftfahrzeugs, die Teil eines Batteriesystems ist, oder ein Generator.

Die Integration der vorstehend genannten Komponenten in die Baueinheit trägt dazu bei, dass der Antriebsstrang insgesamt optimiert werden kann bspw. hinsichtlich des Gewichtes der Achsantriebseinheit, da die Peripherie dieser Komponenten durch die gemeinsame, zentrale Nutzung bereits bestehender Bauteile optimal ausgestaltet werden kann. Außerdem ermöglicht die Integration der Komponenten in ein- und dieselbe Baueinheit eine Verringerung der Anzahl der Haltepunkte, mit denen diese Komponenten im Fahrwerk befestigt werden, wodurch die Montage vereinfacht wird.

Zusammengefasst ermöglicht die Erfindung eine hochintegrierte, elektrische Antriebsachse, bei der die Achsantriebseinheit die vorstehend genannten Komponenten als integrale Bestandteile zusätzlich zu den bekannten Komponenten, d.h. Elektromotor und Getriebe enthält. Durch die Integration der im Stand der Technik gesondert verbauten Komponenten in einer Baueinheit lassen sich Synergie-Effekte realisieren, die zu einer einfachen und gewichtsmäßig leichten Konstruktion des Antriebsstrangs führen. Die konkrete Umsetzung der Synergie-Effekte ist Gegenstand der bevorzugten Ausführungsformen der Erfindung.

Die Erfindung ist für alle Kraftfahrzeuge, d.h. beispielsweise Personenkraftfahrzeuge oder Nutzkraftfahrzeuge geeignet, bei denen eine elektrische Antriebsachse verbaut wird. Die Erfindung eignet sich besonders gut für ausschließlich batteriebetriebene Fahrzeuge. Diese können mit oder ohne Range Extender ausgestattet sein. Die Erfindung kann auch für Hybridfahrzeuge eingesetzt werden, die über eine elektrifizierte Antriebsachse verfügen.

Es ist möglich, die erfindungsgemäßen Achsantriebseinheit bei einer elektrifizierten Vorderachse und/oder bei einer elektrifizierten Hinterachse einzusetzen.

Im Rahmen der Erfindung wird die Achsantriebseinheit unabhängig von der Antriebsachse beansprucht. Zusätzlich wird die Kombination der Antriebsachse mit der erfindungsgemäßen Achsantriebseinheit sowie ein Kraftfahrzeug beansprucht, das die erfindungsgemäße Achsantriebseinheit enthält.

Bevorzugte Ausführungsformen der Erfindung sind in den Unteransprüchen angegeben.

Bevorzugt werden durch jeweils eine Achsantriebseinheit das Antriebsmoment auf mindestens zwei Antriebswellen, auch Antriebsachsen genannt, zum Antrieb von Rädern des Kraftfahrzeugs, übertragen.

Besonders bevorzugt ist für jeweils zwei Antriebsachsen genau eine Achsantriebseinheit vorgesehen.

Dabei ist es besonders zu bevorzugen, wenn die beiden Achsen in Bezug auf die Achsantriebseinheit gesehen an gegenüberliegenden Seiten der Achsantriebseinheit angeordnet sind. Mit anderen Worten wird durch die Achsantriebseinheit jeweils ein rechtes und ein linkes Rad des Kraftfahrzeuges angetrieben und, falls entsprechend integriert, auch gelenkt.

Bei einer besonders bevorzugten Ausführungsform weist die Baueinheit ein gemeinsames Gehäuse auf. Dies hat den Vorteil, dass das Gehäuse als Mehrfunktionsbauteil ausgebildet sein kann, das verschiedene Funktionen, wie beispielsweise Kühlung oder Kopplung mit einer Energieversorgung, für die im Gehäuse angeordneten Komponenten zentral übernimmt. Ebenso können die Leistungselektronik einerseits und eine elektromechanische Betriebsbremsanlage und/oder eine elektromechanische Lenkanlage und/oder ein induktiver Ladeempfänger für ein Batteriesystem andererseits, genauso wie deren Elemente wie z.B. Bremsen der Betriebsbremsanlage, an/in der Baueinheit und/oder dem Gehäuse angebaut und/oder angeflanscht sein.

Es hat sich ebenfalls als vorteilhaft herausgestellt, dass der induktive Ladeempfänger mindestens eine Spule aufweist, die an der Unterseite und innerhalb des Gehäuses angeordnet ist. Dadurch ist der Ladeempfänger vor Verschmutzung und Witterungseinflüssen geschützt. Außerdem ist die Spule (Sekundärspule oder Empfängerspule) direkt über der Fahrebene des Kraftfahrzeugs positioniert und hat eine geringe Distanz beim Laden zu einer Senderspule (Primärspule), die entweder unter, in oder auf der Fahrebene angeordnet sein kann. Dies erhöht den Wirkungsgrad des ausgesandten magnetischen Wechselfelds der Primärspule auf die Sekundärspule, das eine Wechselspannung in der Sekundärspule induziert.

Vorzugsweise ist mindestens ein Teil der Gehäuseunterseite, über der die mindestens eine Spule angeordnet ist, als Feldführungselement für magnetische Wechselfelder ausgebildet. Dies hat den Vorteil, das Magnetfeld z.B. an die Spule und/oder an einen Magnetfeld-Sensor des Ladeempfängers zu führen und/oder von anderen Komponenten der Baueinheit, die durch das Magnetfeld gestört werden würden oder keine Verwendung für das Magnetfeld haben, wegzuführen, insbesondere fernzuhalten bzw. abzuschirmen.

Ebenso ist es von Vorteil, wenn mindestens ein Teil der Gehäuseunterseite, über der die mindestens eine Spule angeordnet ist, schirmförmig und insbesondere konkav ausgebildet ist. Hierbei handelt es sich um eine konkrete Ausgestaltung der Feldführungseigenschaft der Gehäuseunterseite durch diese Formgebung.

Eine weitere konkrete Ausgestaltung des Gehäuses erfolgt durch die Materialwahl der Gehäuseunterseite, die eine bessere Führung und Übertragung mit geringen Verlusten des Magnetfelds ermöglicht. Hierbei besteht zusätzliche oder alternative mindestens ein Teil der Gehäuseunterseite, über der die mindestens eine Spule angeordnet ist, aus einer Aluminiumlegierung mit 40 Prozent Volumenanteil Ferrit. Dieses Material hat geringe Ummagnetisierungsverluste und heizt sich somit nicht signifikant auf, wodurch die Komponenten der Achsantriebseinheit vor einer Überhitzung geschützt werden.

Vorzugsweise ist der induktive Ladeempfänger für magnetische Wechselfelder im Frequenzbereich von mindestens 10 kHz, insbesondere 80 kHz oder 140 kHz, angepasst. Durch höhere Frequenzen des Magnetfelds sind höhere Übertragungsleistungen bei gleicher Fläche und Flussdichte auf die Empfängerspule möglich. Ebenso ist gemäß der deutschen Anwendungsrichtlinie VDE, 2011-03, VDE AR 2122-4 eine Nennfrequenz von 140 kHz spezifiziert, die zur induktiven Ladung von Elektrofahrzeugen empfohlen wird.

In einer weiteren bevorzugten Ausführungsform sind der Elektromotor und der induktive Ladeempfänger jeweils flüssigkeitsgekühlt sind und die Achsantriebseinheit weist eine Einrichtung zur Kühlflüssigkeitsversorgung des Elektromotors und des induktiven Ladeempfängers auf. Dadurch werden ein störungsfreier Betrieb und ein Schutz vor Beschädigungen durch Überhitzung der genannten Komponenten erreicht. Außerdem wird mittels der Einrichtung zur Kühlflüssigkeitsversorgung eine zentrale Einheit bereitgestellt, die mehrere Komponenten versorgt und somit Platz gespart wird. Die Integration der vorstehend genannten Komponenten in eine Baueinheit bietet die Möglichkeit einer zentralen Kühlflüssigkeitsversorgung, sodass die für den Elektromotor erforderliche Kühlflüssigkeitsversorgung auch für andere Komponenten nutzbar gemacht wird. Dies ist deshalb besonders vorteilhaft, weil der Kühlwasservorlauf des Elektromotors in der Regel ca. 65 °C beträgt.

Des Weiteren hat es sich als vorteilhaft herausgestellt, wenn die Baueinheit, insbesondere das Gehäuse, vorzugsweise Anschlüsse zur Verbindung der Einrichtung zur Kühlflüssigkeitsversorgung mit einem externen Kühlflüssigkeitskreislauf und/oder einen internen Kühlflüssigkeitskreislauf aufweist. Dies hat den Vorteil, etwaige außerhalb der Achsantriebseinheit angeordnete Kühlaggregate anzuschließen bzw. die Kühlflüssigkeit aus der Achsantriebseinheit herauszuleiten und/oder in diese nachzuleiten. Bei der ersten Variante (externer Kühlflüssigkeitskreislauf) wird die von der Kühlflüssigkeit aufgenommene Wärme außerhalb der Baueinheit abgeführt. Dazu wird die Kühlflüssigkeit von außen zugeleitet und wieder nach außen abgeleitet, nachdem die Kühlflüssigkeit den zu kühlenden Komponenten passiert hat. Bei der zweiten Variante (interner Kühlflüssigkeitskreislauf) handelt es sich um einen geschlossenen Kühlflüssigkeitskreislauf innerhalb der Baueinheit. Dieser hat den Vorteil, dass die Baueinheit gekapselt werden kann.

Vorzugsweise ist die Leistungselektronik im Fahrbetrieb als Wechselrichter zwischen Batteriesystem und Elektromotor und im Ladebetrieb als Gleichrichter zwischen dem induktiven Ladeempfänger und dem Batteriesystem angepasst. Durch die konzentrierte Funktionssammlung in der Leistungselektronik ist eine kompaktere Struktur und kleinere Größe der Achsantriebseinheit möglich.

In einer weiteren bevorzugten Ausführungsform weist die Leistungselektronik einen Hochvolt/Niedervolt-DC/DC Wandler und/oder zwei separate elektrische Anschlüsse (z.B. von 12 Volt), insbesondere zur Niedervoltenergieversorgung eines Fahrzeugbordnetzes, auf. Hierbei wird die Hochvoltspannung des Batteriesystems durch den genannten Wandler heruntertransformiert und kann zur elektrischen Versorgung von Komponenten des Achsantriebseinheit und/oder des Fahrzeugbordnetzes verwendet werden.

Neben den in den Unteransprüchen genannten Merkmalen sind weitere bevorzugte Ausgestaltungsformen der Achsantriebseinheit vorgesehen, die die nachfolgend erläuterten Merkmale zusätzlich oder alternativ aufweisen.

Zusätzlich zu Elektromotor, Getriebe, induktiven Ladeempfänger und Leistungselektronik sind mit einer Betriebsbremsanlage und/oder mit einer Lenkanlage für die Längsdynamik und für die Querdynamik des Kraftfahrzeugs verantwortliche Komponenten in die Baueinheit integriert. Durch die Integration der Betriebsbremsanlage und/oder der Lenkanlage in ein- und dieselbe Baueinheit mit dem Elektromotor, dem Getriebe und der Leistungselektronik wird eine hohe funktionale und physische Integration der relevanten Längs- und Querdynamikkomponenten in eine zentrale Einheit erreicht.

Die Betriebsbremsanlage kann wenigstens eine Betriebsbremse mit wenigstens einem mechanischen Bremselement zur Übertragung der Bremskraft und wenigstens einem elektrisch betätigbaren Aktuator für das Bremselement aufweisen. Die Betriebsbremse kann bspw. als Reibungsbremse, insbesondere als Keilbremse ausgeführt sein. Die Erfindung ist nicht auf Keilbremsen beschränkt, sondern umfasst auch andere elektromechanisch betätigbare Betriebsbremsen.

Bei einer bevorzugten Ausführung sind die Betriebsbremsanlage und der Elektromotor wahlweise oder gleichzeitig zur Verzögerung des Kraftfahrzeugs ansteuerbar sind. Wie oben beschrieben kann der Elektromotor zur Rekuperation der Bremsenergie als Generator betrieben werden. Der Elektromotor/Generator wirkt damit wie eine Dauerbremsanlage. Die Fahrzeugverzögerungssteuerung bringt durch den integrierten Antriebssteuersatz wahlweise, in Abhängigkeit der vorgegebenen Führungsgröße und des Betriebszustandes der elektrifizierten Antriebsachse den Elektromotor und/oder die elektromechanische Bremse zur Anwendung.

Vorzugsweise weist die Betriebsbremsanlage zwei Betriebsbremsen auf, die zur Übertragung radindividueller Bremsmomente auf die Antriebsachse ausgebildet sind. Dadurch wird ein redundantes Sicherheitssystem für den Fall geschaffen, dass eine der beiden Betriebsbremsen ausfällt. Außerdem können die beiden Betriebsbremsen aufgrund der Übertragung radindividueller Bremsmomente für die Verteilung der Antriebsmomente auf die verschiedenen Räder eingesetzt werden (torque vectoring).

Des Weiteren ist es von Vorteil, wenn die Baueinheit einen Zentralmotor mit Getriebe und korrespondierendem Differenzial aufweist, und die Betriebsbremsanlage radindividuelle Inboardbremsen zur Verwendung von Torque-Vectoring aufweist.

Zur Antriebsdrehmomentverteilung kann entweder ein Differenzialgetriebe oder eine geteilte Antriebsachse eingesetzt werden.

Die Lenkanlage kann als Achsschenkellenkung oder als Einzelradlenkung ausgebildet sein. Die Achsschenkellenkung ist bevorzugt, wenn die Lenkanlage im Zusammenhang mit einem Konzept zur Antriebsmomentverteilung (Torque Vectoring) eingesetzt wird.

Bei einer weiteren bevorzugten Ausführung ist die Leistungselektronik zur Steuerung bzw. Energieversorgung des Elektromotors und zur Steuerung bzw. Energieversorgung der elektromechanischen Betriebsbremsanlage und/oder der Lenkanlage ausgebildet. Der zentrale Einsatz der Leistungselektronik zur gemeinsamen Steuerung bzw. Energieversorgung mehrerer Komponenten in der Baueinheit bietet die Voraussetzung für eine verbesserte Regelungsperformance, da die Regelung der verschiedenen Komponenten der Baueinheit, beispielsweise des Elektromotors und der Betriebsbremsanlage aufeinander abgestimmt werden können (blending). Beim Bremsen ist im Zusammenhang mit einem elektrifizierten Antriebsstrang die Möglichkeit der Rekuperation zu berücksichtigen, bei der die Bremsleistung dazu verwendet wird, den Elektromotor anzutreiben, um diesen als Generator zu nutzen. Mit der dadurch erzeugten elektrischen Energie wird die Traktionsbatterie oder eine Niedervoltbatterie aufgeladen. Die Verteilung der Bremskraft auf die elektromechanische Betriebsbremsanlage und den als Generator wirkenden Elektromotor wird als Blending bezeichnet. Außerdem kann die Leistungselektronik zusätzlich die Regelung des Elektromotors und der Lenkanlage übernehmen, um diese aufeinander abzustimmen. Dies ist besonders dann vorteilhaft, wenn mehrere Elektromotoren im Rahmen eines Konzepts zur unterschiedlichen Verteilung des Antriebsmomentes auf die Räder (Torque Vectoring) die Lenkbewegung überlagern oder eine Rückfallebene bildet, für den Fall, dass die Lenkanlage ausfällt.

Hinsichtlich der Leistungselektronik wird zur Vermeidung von ausgangsseitigen EMV-Filtern eine motornahe Systemintegration vorzugsweise angewendet. Ebenso kann ein auslöschendes Schaltverfahren der Torque-Vectoring-Einheiten zur Reduktion der Zwischenkreis-Kapazität verwendet werden. In den Halbleiterstrukturen der Leistungselektronik können Stromsensoren integriert sein und die Transistor-Halbleiterstrukturen, insbesondere IGBT (Insulated Gate Bipolar Transistor), alternative oder zusätzliche Kühlstrukturen aufweisen.

Hinsichtlich des induktiven Ladeempfängers ist alternativ dessen Anbau an das Gehäuse der Achsantriebseinheit für eine optionale Bereitstellung des induktiven Ladens vorgesehen.

Die Erfindung wird nachfolgend anhand von Ausführungsbeispielen mit weiteren Einzelheiten unter Bezug auf die beigefügten schematischen Zeichnungen näher erläutert.

In diesen zeigen
- Fig. 1: einen Querschnitt einer Achsantriebseinheit nach einem erfindungsgemäßen Ausführungsbeispiel mit einem einzigen Elektromotor als Traktionsmotor;
- Fig. 2: einen Querschnitt einer Achsantriebseinheit nach einem weiteren erfindungsgemäßen Ausführungsbeispiel mit zwei Elektromotoren als Traktionsmotoren;
- Fig. 3: einen Querschnitt einer Achsantriebseinheit nach einem weiteren erfindungsgemäßen Ausführungsbeispiel mit einem Hilfselektromotor zur Verteilung des Achsantriebsmomentes;
- Fig. 4: einen Querschnitt einer Achsantriebseinheit nach einem weiteren erfindungsgemäßen Ausführungsbeispiel, in der die Zusammenwirkung des induktiven Ladeempfängers und einer unter der Fahrebene angeordneten Senderspule dargestellt ist;
- Fig. 5: ein Schaltbild einer dreiphasigen Brückenschaltung aus einer Leistungselektronik einer bevorzugten Achsantriebseinheit, die mit einer Batterie, einem Elektromotor und einem induktiven Ladeempfänger verbunden ist; und
- Fig. 6: ein Schaltbild eines Dreitors als Rotorelektronik aus einer Leistungselektronik einer bevorzugten Achsantriebseinheit.

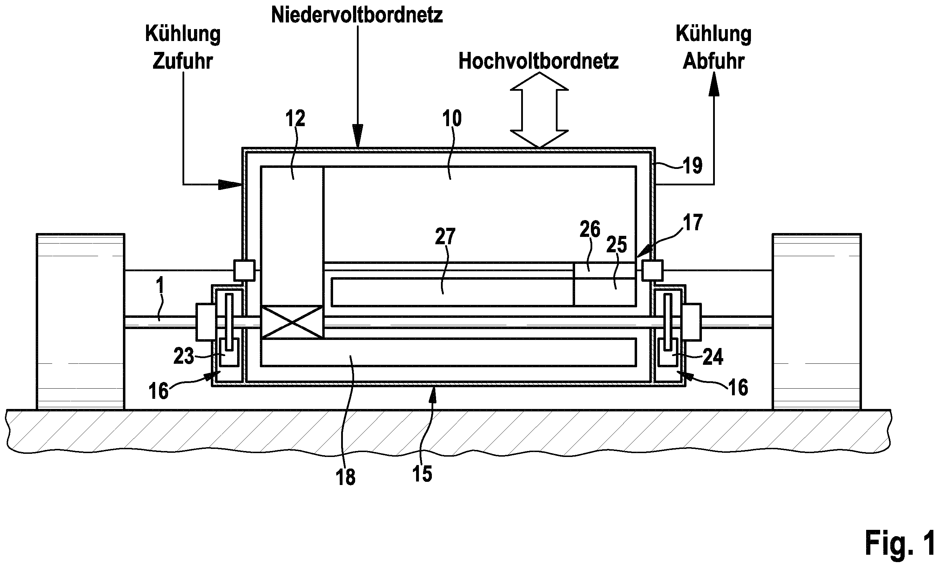

Die Achsantriebseinheit gemäß Fig. 1 kann mit der Vorderachse und/oder der Hinterachse eines Kraftfahrzeuges kombiniert sein. Dasselbe gilt für die anderen Ausführungsbeispiele. Die Achsantriebseinheit ist für alle Kraftfahrzeuge, d.h. beispielsweise Personenkraftfahrzeuge oder Nutzkraftfahrzeuge geeignet, bei denen eine elektrische Antriebsachse verbaut wird. Die Achsantriebseinheit eignet sich besonders gut aber nicht ausschließlich für rein batteriebetriebene Fahrzeuge. Die Achsantriebseinheit kann auch für Hybridfahrzeuge eingesetzt werden, die über eine elektrifizierte Antriebsachse verfügen.

Die Achsantriebseinheit gemäß Fig. 1 weist eine Baueinheit 15 auf, in die verschiedene zumindest teilelektrische Komponenten integriert sind. Die in die Baueinheit 15 integrierten Komponenten bilden eine Baugruppe, die als eine Einheit montiert und mit anderen außerhalb der Baueinheit 15 angeordneten Bauteilen des Kraftfahrzeugs interagieren. Dazu weist die Baueinheit 15 ein gemeinsames Gehäuse 19 auf, in dem die zur Baueinheit 15 gehörenden Komponenten angeordnet sind bzw. an dem Komponenten der Baueinheit 15 befestigt sind. Es ist also möglich, dass die Komponenten der Baueinheit 15 sowohl im Gehäuse 19 als auch am Gehäuse 19, d.h. an der Außenseite des Gehäuses 19 angeordnet sind.

Das Gehäuse 19 ist als multifunktionales Gehäuse ausgebildet, das die darin angeordneten Komponenten nicht nur mechanisch und thermisch schützt, sondern auch die Kopplung der Komponenten mit außerhalb des Gehäuses befindlichen Geräten und Bauteilen des Kraftfahrzeugs ermöglicht. Dazu weist das Gehäuse 19 verschiedene Einrichtungen, wie beispielsweise eine Kühleinrichtung oder die Leistungselektronik 27 auf, die zentral von den im bzw. am Gehäuse angeordneten Komponenten genutzt werden. Weitere Funktionalitäten des Gehäuses 19 sind möglich.

Das Gehäuse 19 ist geschlossen und für das Thermomanagement wärmeisoliert.

Die Baueinheit 15 gemäß Fig. 1 weist einen einzigen Elektromotor 10 als Traktionsmotor auf, der das für die Bewegung des Kraftfahrzeuges erforderliche Antriebsmoment erzeugt. Das vom Elektromotor 10 erzeugte Antriebsmoment wird durch ein Getriebe 12 übersetzt und auf die Antriebsachse 1 übertragen. Der Elektromotor 10 und das Getriebe 12 sind dementsprechend miteinander verbunden.

Der Elektromotor 10 kann ein Asynchronmotor oder ein permanenterregter Synchronmotor sein. Das gilt für alle im Rahmen der Erfindung und den zugehörigen Ausführungsbeispielen beschriebenen Elektromotoren.

Die Baueinheit 15 weist eine elektromechanische Betriebsbremsanlage 16 auf, die im Gehäuse 19 angeordnet ist. Die Steuerung der elektromechanischen Betriebsbremsanlage 16 erfolgt durch ein elektrisches Signal der Steuersignalübertragung, das bspw. durch Betätigung des Bremspedals oder einer anderen Betätigungseinrichtung ausgelöst wird. Die Bremswirkung ist dabei vom Fahrzeugführer im Fahrbetrieb veränderbar. Dadurch wird ein elektrisches Ausgangssignal bzw. Stellsignal erzeugt, das die mechanischen Bauteile der Betriebsbremsanlage 16, bspw. die Bremsbacken oder den Bremskeil einer Reibungsbremse, steuert, wodurch die Bremskräfte auf die Antriebsachse übertragen werden. Konkret umfasst die Betriebsbremsanlage 16 zwei Betriebsbremsen 23, 24, die in Längsrichtung der Antriebsachse 1 mit Abstand von den Rädern angeordnet sind. Bei der Betriebsbremsanlage 16 handelt es sich demnach um eine Inboard-Betriebsbremsanlage, bei der die Bremskräfte auf die Antriebsachse 1 übertragen werden. Jede Betriebsbremse 23, 24 umfasst einen elektrisch betätigbaren Aktuator, der eine Stellkraft auf die jeweiligen mechanischen Bremselemente ausübt und dadurch die gewünschten Bremskräfte erzeugt.

Als ein mögliches, aber nicht ausschließliches Beispiel kann die Betriebsbremse in der Form einer Keilbremse ausgestaltet sein. Dabei umfasst der elektrisch betätigbare Aktuator einen Elektromotor und einen Bremskeil, der vom Elektromotor in zwei entgegengesetzte Richtung, d.h. vor und zurück, bewegt werden kann. Das Bremselement ist als Bremsbelag bzw. Bremsklotz ausgebildet, der durch die schräge Fläche des Bremskeils gegen ein Gegenstück, bspw. eine Bremsscheibe gepresst wird, die mit einer Radantriebswelle der Antriebsachse drehfest verbunden ist. Sobald der Bremsklotz die Bremsscheibe berührt, wirkt die Selbstverstärkung des Keilprinzips.

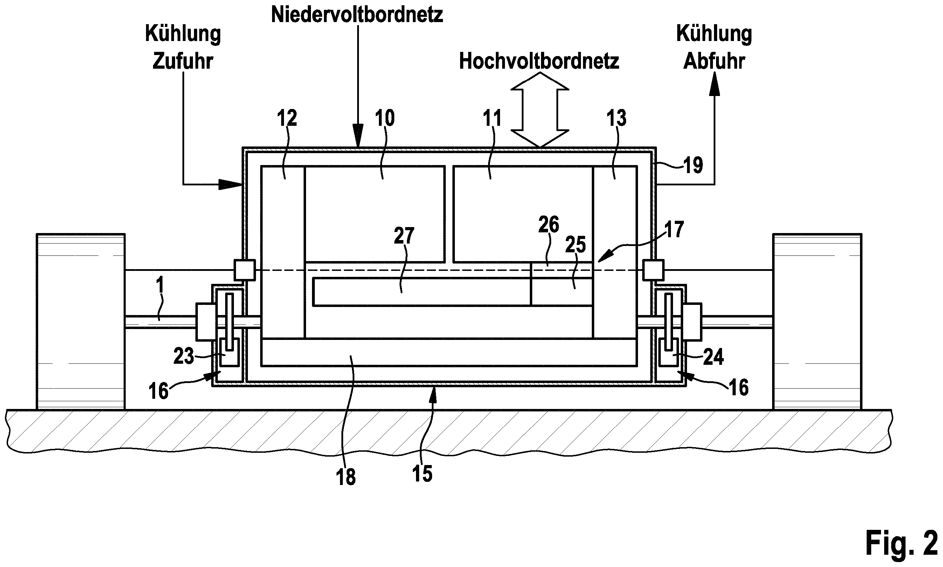

Die beiden Betriebsbremsen 23, 24 sind als redundante Sicherheitssysteme für den Fall ausgebildet, dass eine der beiden Betriebsbremsen 23, 24 ausfällt. Außerdem können die die beiden Betriebsbremsen 23, 24 radindividuell angesteuert werden, so dass durch unterschiedliche Bremskräfte an den Rädern die dort wirkenden Antriebsmomente radindividuell verändert werden können. Dazu kann die Achsantriebseinheit ein Differenzialgetriebe (s. Fig. 1) aufweisen oder mit einer geteilten Antriebsachse 1 verbindbar bzw. verbunden sein (s. Fig. 2)

Die beiden Betriebsbremsen 23, 24 sind im Gehäuse 19 gekapselt, das somit als Partikelkollektor erwirkt. Die Verschmutzung der Felgen durch Bremsabrieb sowie die Feinstaubbelastung wird dadurch verringert. Außerdem kann der Bremsabrieb sich nicht im Gehäuse 19 verteilen, weil die Betriebsbremsen 23, 24 auch nach innen, d.h. zum Gehäuse 19 hin gekapselt sind.

Die Baueinheit 15 gemäß Fig. 1 weist ferner eine Lenkanlage 17 mit einem Elektromotor 25 auf. Der Elektromotor 25 ist durch ein Lenkgetriebe 26 und ein Gestänge mit den Rädern der Antriebsachse 1 mechanisch verbunden.

Vorzugsweise, aber nicht ausschließlich handelt es sich bei der Lenkanlage 17 um eine Steer-by-wire-Lenkanlage, also um eine Lenkanlage, bei der das Lenkrad und das Lenkgetriebe 26 mechanisch entkoppelt sind. Die vom Fahrer in das Lenkrad eingeleitete Lenkbewegung wird sensorisch erfasst. Das Sensorsignal wird in einer Steuerung verarbeitet, die ein Stellsignal an einen Stellantrieb zur Einstellung des gewünschten Lenkwinkels eines gelenkten Rades übermittelt. Der Stellantrieb kann der vorstehend genannte Elektromotor 25 der Lenkanlage 17 sein. Um die für ein sicheres Fahren erforderlichen Betätigungskräfte und Reaktionskräfte zu simulieren, wird durch ein weiteres Stellorgan ein Handmoment in das Lenkrad eingeleitet. Auf Grund der mechanischen Entkopplung des Lenkrades vom Lenkgetriebe 26 ist es möglich, automatische Lenkkorrekturen auszuführen oder autonomes Fahren zu realisieren, ohne dass das Lenkrad hierfür bewegt wird. Die Steer-by-wire-Lenkung ist eine elektromechanische Lenkung, da das vom Elektromotor 25 erzeugte Lenkmoment durch ein mechanisches Lenkgetriebe 26, beispielsweise ein Zahnstangengetriebe oder einen Kugelgewindetrieb, auf die Räder übertragen wird.

Der Elektromotor 25 kann auch als Hilfsmotor zur Unterstützung eines mechanisch erzeugten Lenkmomentes ausgebildet sein. Bei der Lenkung kann es sich um eine Achsschenkellenkung oder um eine Einzelradlenkung handeln. Für die Umsetzung der Antriebsmomentverteilung wird die Achsschenkellenkung bevorzugt.

Die mechanischen Komponenten der Lenkanlage 17 können an der Außenseite des Gehäuses 19 befestigt, insbesondere angeflanscht sein. Die mechanischen Komponenten der Lenkanlage 17 können in Fahrtrichtung vorne oder hinten am Gehäuse 19 angeordnet sein. Dadurch wird die jeweilige Einbaulage der Achsantriebseinheit berücksichtigt. Der Elektromotor 15 ist im Gehäuse 19 angeordnet, wodurch die Kühlung und elektrische Ansteuerung des Elektromotors 15 erleichtert wird.

Im unteren Bereich des Gehäuses 19 ist ein induktiver Ladeempfänger 18 angeordnet, durch den im Betrieb der Achsantriebseinheit die Traktionsbatterie aufgeladen werden kann.

Folgende Komponenten der Baueinheit werden von den vorstehend beschriebenen Komponenten zentral genutzt.

In die Baueinheit 15 ist eine Leistungselektronik 27 integriert, die den Elektromotor 10 sowie wenigstens eine weitere Komponente der Baueinheit 15 regelt. Die Leistungselektronik 27 übernimmt die Umformung von Gleichstrom in Wechselstrom oder umgekehrt sowie die Regelung der Leistungsflüsse. Derartige Geräte sind im Stand der Technik bekannt und müssen nicht näher beschrieben werden. Bei dem Beispiel gemäß Fig. 1 wird die Leistungselektronik 27 zusätzlich dazu verwendet, die Lenkanlage 17, die Betriebsbremsanlage 16 sowie den induktiven Ladeempfänger 18 anzusteuern. Dies hat den Vorteil, dass die Leistungsregelung der einzelnen Komponenten, beispielsweise des Elektromotors und der Betriebsbremsanlage 16 abgestimmt werden kann (blending). Außerdem kann die Leistungselektronik 27 zentral durch die für den Elektromotor 10 vorgesehene Einrichtung zur Kühlflüssigkeitsversorgung mitgekühlt werden.

Dir Einrichtung zur Kühlflüssigkeitsversorgung (nicht dargestellt) versorgt neben dem flüssigkeitsgekühlten Elektromotor 10 weitere Komponenten der Baueinheit 15 mit Kühlflüssigkeit, wie beispielsweise die Betriebsbremsanlage 16, den Elektromotor 25, der Lenkanlage 17 sowie den Ladeempfänger 18. Die Einrichtung zur Kühlflüssigkeitsversorgung kann, wie in Fig. 1 dargestellt Anschlüsse für die Zufuhr der Kühlflüssigkeit bzw. die Abfuhr der Kühlflüssigkeit aufweisen. Die Einrichtung zur Kühlflüssigkeitsversorgung gemäß Fig. 1 ist dementsprechend mit einem externen Kühlflüssigkeitskreislauf verbindbar. Alternativ kann ein geschlossener interner Kühlflüssigkeitskreislauf verwendet werden, der die im Gehäuse 19 angeordneten Komponenten kühlt.

In Fig. 1 ist weiterhin dargestellt, dass das Gehäuse 19 über Anschlüsse zur Verbindung mit einem Niedervoltbordnetz und einem Hochvoltbordnetz verfügt.

Das Ausführungsbeispiel gemäß Fig. 2 unterscheidet sich von dem Ausführungsbeispiel gemäß Fig. 1 darin, dass anstelle des einzigen Elektromotors 10 zwei gesonderte Elektromotoren 10, 11 (erste und zweite Elektromotoren 10, 11) als Traktionsmotoren angeordnet sind. Zur Übertragung radindividueller Antriebsmomente durch die beiden Elektromotoren 10, 11 ist die Antriebsachse 1 in zwei Achsabschnitte geteilt, wobei jeweils ein Elektromotor 10, 11 mit einem Achsabschnitt durch entsprechende Getriebe 12, 13 (erste und zweite Getriebe 12, 13) verbunden ist. Alternativ kann ein Differenzialgetriebe zwischen den beiden Elektromotoren 10, 11 angeordnet sein.

Im Übrigen wird auf die Ausführungen im Zusammenhang mit der Achsantriebseinheit gemäß Fig. 1 Bezug genommen.

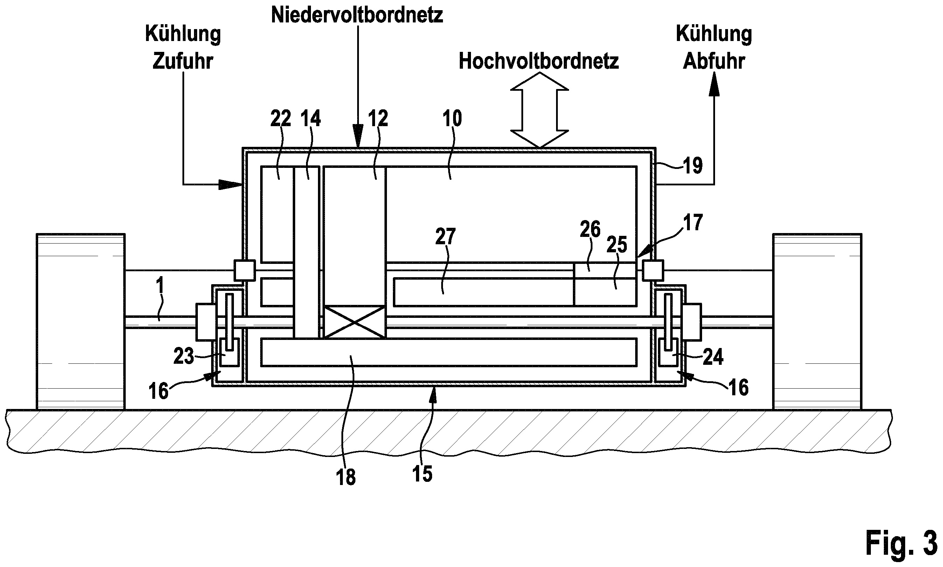

Die Achsantriebseinheit gemäß Fig. 3 ist ebenfalls dazu geeignet, unterschiedliche Antriebsmomente auf die beiden Räder zu übertragen. Die Achsantriebseinheit gemäß Fig. 3 weist einen einzigen Elektromotor 10 als Traktionsmotor auf. Dieser ist durch das Getriebe 12, das als Differenzialgetriebe ausgebildet ist, mit der Antriebsachse 1 verbunden. Durch das Differenzialgetriebe 12 wird eine Leistungsverzweigung zur Übertragung unterschiedlicher Antriebsmomente auf die beiden Räder bewirkt. Die Antriebsmomentverteilung wird durch einen Hilfselektromotor 22 (dritter Elektromotor) erreicht, der durch ein zusätzliches (drittes) Getriebe 14 mit der Antriebsachse 1 mechanisch verbunden ist. Durch den Hilfselektromotor 22 kann das vom Elektromotor 10 aufgebrachte Antriebsmoment überlagert werden, sodass auf beide Räder unterschiedliche Antriebsmomente aufgebracht werden können. Der zusätzliche Elektromotor 22 und das zugehörige dritte Getriebe 14 sind im Gehäuse 19 untergebracht und werden durch die zentrale Einrichtung zur Kühlflüssigkeitsversorgung gekühlt und durch die zentrale Leistungselektronik 27 mit Energie versorgt. Zu den übrigen Komponenten der Baueinheit 15 wird auf die Ausführungen zur Fig. 1 verwiesen.

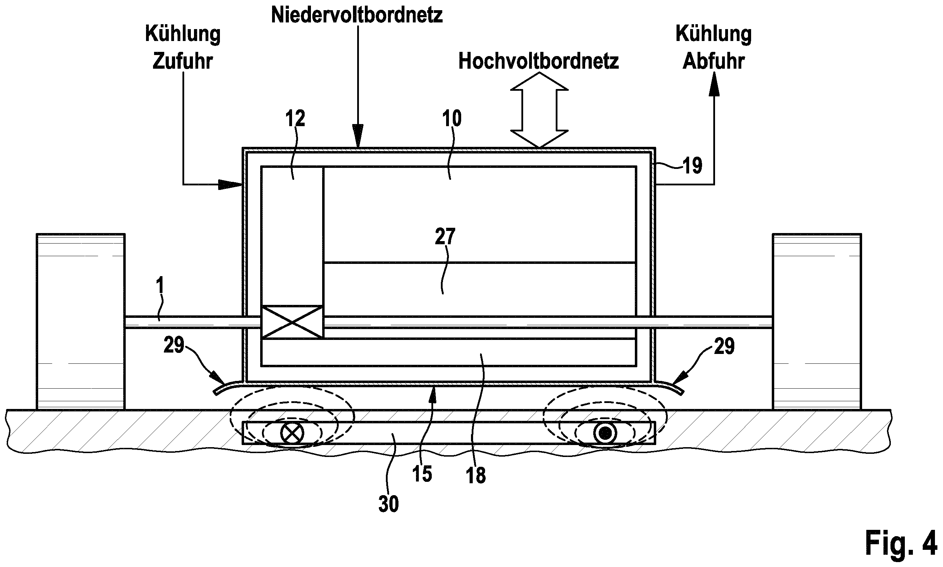

In der Fig. 4 wird ein Ladebetrieb des Kraftfahrzeugs dargestellt. Die Achsantriebseinheit gemäß Fig. 4 ist ähnlich der Achsantriebseinheit gemäß Fig. 1 aufgebaut, wobei die Betriebsbremsanlage 16 und die Lenkanlage 17 nicht dargestellt sind. Unterhalb der Achsantriebseinheit ist ein Sendersystem 30 mit einer Senderspule unterhalb der Fahrzeugebene angeordnet, das ein magnetisches Wechselfeld erzeugt und mit dem eine Wechselspannung im induktiven Ladeempfänger 18, insbesondere in dessen wenigstens einen Spule, induziert wird.

In allen Ausführungsbeispielen können die Betriebsbremsen 23, 24 so mit den als Traktionsmotoren wirkenden ersten und zweiten Elektromotoren 10, 11 oder mit dem einzigen Elektromotor 10 und dem Hilfselektromotor (dritter Elektromotor) kombiniert werden, dass die Betriebsbremsanlage 16 die Antriebsmomentverteilung auf die Räder unterstützt. Der Elektromotor 25 der Lenkanlage 17 kann als vierter Elektromotor bezeichnet werden.

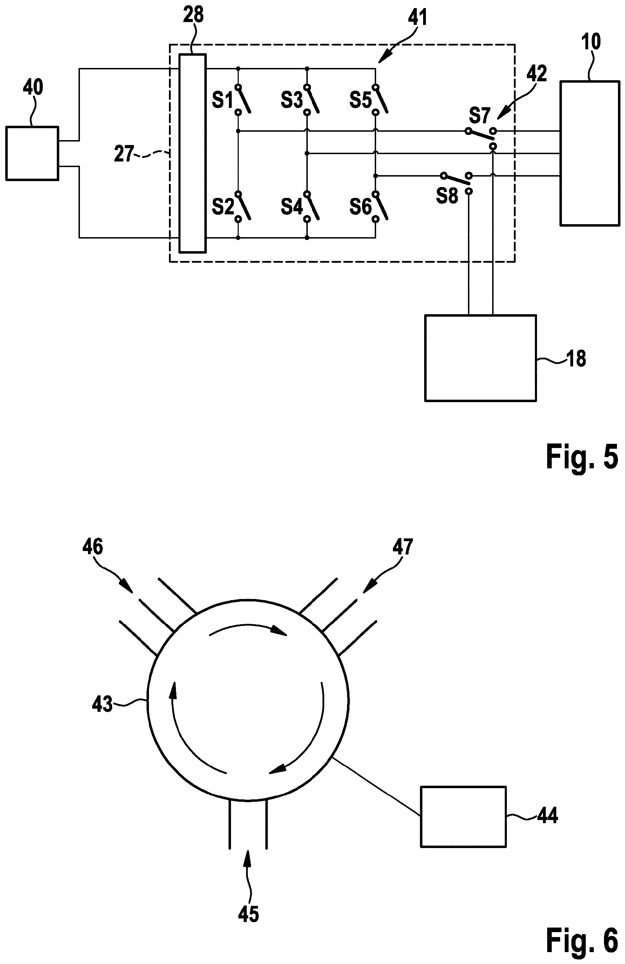

Fig. 5 zeigt ein Schaltbild einer dreiphasigen Brückenschaltung 41 aus einer Leistungselektronik 27 einer bevorzugten Achsantriebseinheit, die mit einer Batterie 40, einem Elektromotor 10 und einem induktiven Ladeempfänger 18 verbunden ist. Die Schaltung aus Fig. 5 zeigt einen prinzipiellen Aufbau für die Steuerung und Energieversorgung der angezeigten Komponenten; das bedeutet, dass die Leistungselektronik 27 mit anderweitigen, alternativen oder zusätzlichen Schaltungen, Halbleiterstrukturen und/oder elektrischen Bauelementen realisiert werden kann. Die Leistungselektronik 27 weist eine Umschaltabzweigung 42, eine Brückenschaltung 41 und einen Synchronwandler 28 zur bidirektionalen Energieübertragung zwischen Brückenschaltung 41 und Batterie 40 auf, die in Reihe geschalten sind. Die Brückenschaltung 41 ist über sechs Schalter S1 bis S6 steuerbar und dient in Richtung Batterie-Motor als Wechselrichter und in Richtung Motor-Batterie bzw. Ladeempfänger-Batterie als Gleichrichter. Die Schalter S1 bis S6 werden über ein jeweiliges PWM Signal (Pulsweitenmodulation) gesteuert und erzeugen im Wechselrichter-Betrieb drei Phasensignale, die um 120 Grad zu einander versetzt sind und den Motor 10 elektrisch versorgen und antreiben. Im Fahrbetrieb sind die Schalter S7 und S8 der Umschaltabzweigung 42 mit dem Motor 10 verbunden; im Ladebetrieb hingegen mit dem induktiven Ladeempfänger 18. Wenn die Brückenschaltung 41 als Gleichrichter verwendet wird, befindet sich das Fahrzeug entweder im Ladebetrieb oder beim Bremsvorgang bzw. Rekuperation. Hierbei wird der Wechselstrom/spannung des Motors bzw. des Ladeempfängers 18 ebenfalls durch ein entsprechendes an den Schaltern S1 bis S6 anliegendes PWM-Signal gleichgerichtet.

Fig. 6 zeigt ein Schaltbild eines Dreitors 43 als Rotorelektronik aus einer Leistungselektronik einer bevorzugten Achsantriebseinheit, das alternativ bei der Umschaltungsabzweigung 42 in Fig. 5 eingesetzt wird. Das Dreitor 43 weist ein erstes Tor 45 mit zwei Phasen, ein zweites Tor 46 mit drei Phasen und ein drittes Tor 47 mit drei Phasen auf. Das erste Tor 45 wird mit dem induktiven Ladeempfänger 18, das zweite Tor 46 mit der Brückenschaltung 41 und das dritte Tor 47 mit dem Motor 10 aus Fig. 5 verbunden. Hierbei ist die Spannung des zweiten Tors 46 vom Strom und der Spannung der beiden Phasen des ersten Tors 45, die Spannung des dritten Tors 47 vom Strom und der Spannung der drei Phasen des zweiten Tors 46 abhängig; insbesondere zwei der drei Phasen des zweiten Tors 46 sind identisch zu den Phasen des ersten Tors 45 und die drei Phasen des dritten Tors 47 identisch zu den drei Phasen des zweiten Tors 46. Somit ist die Spannung eines Tors immer nur vom Strom und der Spannung des benachbarten Tors abhängig - dies wird durch die eingezeichneten Pfeile verdeutlicht. Im Rekuperations-Betrieb, wenn der Motor als Generator wirkt (z.B. beim Bremsvorgang), wird mittels der Schaltung 44 die Funktion des Dreitors 43 bzw. die Torabhängigkeiten und somit die Richtung der Pfeile umgedreht (von Uhrzeigersinn zu Gegenuhrzeigersinn), um den erzeugten Strom zur Brückenschaltung zu leiten.

Bevorzugt wird durch jeweils eine Baueinheit 15 das Antriebsmoment auf mindestens zwei Antriebsachsen 1, auch Antriebswellen genannt, zum Antrieb von Rädern des Kraftfahrzeuges übertragen.

Besonders bevorzugt ist für jeweils zwei Antriebsachsen 1 genau eine Baueinheit 15 vorgesehen.

Dabei ist es besonders zu bevorzugen, wenn die beiden Achsen 1 in Bezug auf die Baueinheit 15 gesehen an gegenüberliegenden Seiten der Baueinheit 15 angeordnet sind. Mit anderen Worten werden durch die Baueinheit 15 jeweils ein rechtes und ein linkes Rad des Kraftfahrzeuges angetrieben und, falls entsprechend integriert, auch gelenkt.

### Bezugszeichenliste

- 1: Antriebsachse
- 10: erster Elektromotor (Traktionsmotor)
- 11: zweiter Elektromotor (Traktionsmotor)
- 12: erstes Getriebe
- 13: zweites Getriebe
- 14: drittes Getriebe
- 15: Baueinheit
- 16: Betriebsbremsanlage
- 17: Lenkanlage
- 18: Ladeempfänger
- 19: Gehäuse
- 20: frei
- 21: frei
- 22: dritter Elektromotor (Hilfselektromotor für Torque Vectoring)
- 23: erste Betriebsbremse
- 24: zweite Betriebsbremse
- 25: vierter Elektromotor (Lenkanlage)
- 26: Lenkgetriebe (Lenkanlage)
- 27: Leistungselektronik
- 28: Synchronwandler
- 29: Schirmförmiges Magnetfeldführungselement (des Gehäuses)
- 30: Sendersystem (mit einer Senderspule)
- 40: Batterie
- 41: Brückenschaltung
- 42: Umschaltungsabzweigung
- 43: Dreitor (als Rotorelektronik)
- 44: Richtungsumkehr-Schalter/Steuerung
- 45: 1. Tor (des Dreitors)
- 46: 2. Tor (des Dreitors)
- 47: 3. Tor (des Dreitors)

## Patentansprüche

1. Achsantriebseinheit für ein elektrisch antreibbares Kraftfahrzeug, das wenigstens eine Antriebsachse (1) aufweist, mit wenigstens einem Elektromotor (10, 11) zur Erzeugung eines Antriebsmomentes und wenigstens einem Getriebe (12, 13) zur Übertragung des Antriebsmomentes auf die Antriebsachse (1), wobei der Elektromotor (10, 11) und das Getriebe (12, 13) eine Baueinheit (15) bilden, und wobei
eine Leistungselektronik (27) zum elektrischen Versorgen des wenigstens einen Elektromotors (10, 11) in die Baueinheit (15) integriert ist,
**dadurch gekennzeichnet, dass** ein induktiver Ladeempfänger (18) für ein Batteriesystem in die Baueinheit (15) integriert ist,
wobei die Leistungselektronik mit dem induktiven Ladeempfänger (18) elektrisch verbunden und derart angepasst ist, eine in den induktiven Ladeempfänger induzierbare Wechselspannung gleichzurichten.

2. Achsantriebseinheit nach Anspruch 1
**dadurch gekennzeichnet, dass**
die Baueinheit (15) ein gemeinsames Gehäuse (19) aufweist.

3. Achsantriebseinheit nach Anspruch 2
**dadurch gekennzeichnet, dass**
der induktive Ladeempfänger mindestens eine Spule aufweist, die an der Unterseite und innerhalb des Gehäuses angeordnet ist.

4. Achsantriebseinheit nach Anspruch 3
**dadurch gekennzeichnet, dass**
mindestens ein Teil der Gehäuseunterseite, über der die mindestens eine Spule angeordnet ist, als Feldführungselement für magnetische Wechselfelder ausgebildet ist.

5. Achsantriebseinheit nach Anspruch 3 oder 4
**dadurch gekennzeichnet, dass**
mindestens ein Teil der Gehäuseunterseite, über der die mindestens eine Spule angeordnet ist, schirmförmig und insbesondere konkav ausgebildet ist.

6. Achsantriebseinheit nach einem der Ansprüche 3 bis 5
**dadurch gekennzeichnet, dass**
mindestens ein Teil der Gehäuseunterseite, über der die mindestens eine Spule angeordnet ist, aus einer Aluminiumlegierung mit 40 Prozent Volumenanteil Ferrit besteht.

7. Achsantriebseinheit nach einem der vorherigen Ansprüche
**dadurch gekennzeichnet, dass**
der induktive Ladeempfänger (18) für magnetische Wechselfelder im Frequenzbereich von mindestens 10 kHz, insbesondere 80 kHz oder 140 kHz, angepasst ist.

8. Achsantriebseinheit nach einem der vorherigen Ansprüche
**dadurch gekennzeichnet, dass**
der Elektromotor (10, 11) und der induktive Ladeempfänger (18) jeweils flüssigkeitsgekühlt sind und die Achsantriebseinheit eine Einrichtung zur Kühlflüssigkeitsversorgung des Elektromotors (10, 11) und des induktiven Ladeempfängers (18) aufweist.

9. Achsantriebseinheit nach Anspruch 8 und insbesondere Anspruch 2
**dadurch gekennzeichnet, dass**
die Baueinheit, insbesondere das Gehäuse (19), Anschlüsse zur Verbindung der Einrichtung zur Kühlflüssigkeitsversorgung mit einem externen Kühlflüssigkeitskreislauf oder einen internen Kühlflüssigkeitskreislauf aufweist.

10. Achsantriebseinheit nach einem der vorherigen Ansprüche
**dadurch gekennzeichnet, dass**
die Leistungselektronik im Fahrbetrieb als Wechselrichter zwischen Batteriesystem und Elektromotor (10, 11) und im Ladebetrieb als Gleichrichter zwischen dem induktiven Ladeempfänger (18) und dem Batteriesystem angepasst ist.

11. Achsantriebseinheit nach einem der vorherigen Ansprüche
**dadurch gekennzeichnet, dass**
die Leistungselektronik einen Hochvolt/Niedervolt-DC/DC Wandler zur Niedervoltenergieversorgung eines Fahrzeugbordnetzes aufweist.

12. Antriebsachse für ein Kraftfahrzeug mit einer Achsantriebseinheit nach einem der vorstehenden Ansprüche.

13. Kraftfahrzeug mit einer Achsantriebseinheit nach einem der vorstehenden Ansprüche.

## Claims

1. An axle drive unit for an electric power-driven vehicle with at least one drive axle (1), comprising at least one electric motor (10, 11) for generating drive torque and at least one transmission (12, 13) for transmitting the drive torque to the drive axle (1), wherein the electric motor (10, 11) and the transmission (12, 13) form an assembly (15), and power electronics (27) for supplying power to the at least one electric motor (10, 11) forms an integral part of the assembly (15),
**characterized in that**
an inductive charging receiver (18) for a battery system is integrated into the assembly (15), wherein the power electronics is electrically connected to the inductive charging receiver (18) and adapted to rectify an AC voltage that can be induced into the inductive charging receiver.

2. The axle drive unit according to claim 1,
**characterized in that**
the assembly (15) is provided with a common housing (19).

3. The axle drive unit according to claim 2,
**characterized in that**
the inductive charging receiver comprises at least one coil which is arranged at the underside and inside the housing.

4. The axle drive unit according to claim 3,
**characterized in that**
at least part of the underside of the housing, above which the at least one coil is arranged, is formed as a field guiding member for alternating magnetic fields.

5. The axle drive unit according to claims 3 or 4,
**characterized in that**
at least part of the underside of the housing above which the at least one coil is arranged is umbrella-shaped and in particular formed to be concave.

6. The axle drive unit according to any one of claims 3 to 5,
**characterized in that**
at least part of the underside of the housing above which the at least one coil is arranged is made of an aluminium alloy containing 40 % ferrite by volume.

7. The axle drive unit according to any one of the preceding claims,
**characterized in that**
the inductive charging receiver (18) is adapted to alternating magnetic fields in the frequency range of at least 10 kHz, in particular 80 kHz or 140 kHz.

8. The axle drive unit according to any one of the preceding claims,
**characterized in that**
the each of the electric motor (10, 11) and the inductive charging receiver (18) are liquid-cooled, and the axle drive unit comprises means for supplying coolant to the electric motor (10, 11) and the inductive charging receiver (18).

9. The axle drive unit according to claim 8 and in particular according to claim 2, **characterized in that**
the assembly, in particular the housing (19), comprises ports for connecting the means for supplying coolant to an external coolant circuit or an internal coolant circuit.

10. The axle drive unit according to any one of the preceding claims,
**characterized in that**
the power electronics is adapted to work as an inverter between the battery system and the electric motor (10, 11) in driving mode and as a rectifier between the inductive charging receiver (18) and the battery system in charging mode.

11. The axle drive unit according to any one of the preceding claims,
**characterized in that**
the power electronics comprises a high-voltage/low-voltage DC/DC converter for supplying low-voltage power to an electrical system of the vehicle.

12. A drive axle for a motor vehicle comprising an axle drive unit according to any one of the preceding claims.

13. Motor vehicle comprising an axle drive unit according to any one of the preceding claims.

## Revendications

1. Unité d'entraînement d'essieu pour un véhicule à moteur pouvant être entraîné électriquement, présentant au moins un essieu moteur (1), avec au moins un moteur électrique (10, 11) pour produire un couple d'entraînement et au moins une transmission (12, 13) pour transmettre le couple d'entraînement à l'essieu moteur (1), dans laquelle le moteur électrique (10, 11) et la transmission (12, 13) forment une unité structurale (15), et dans laquelle
une électronique de puissance (27) pour une alimentation électrique du au moins un moteur électrique (10, 11) est intégrée dans l'unité structurale (15), **caractérisée en ce qu'**un récepteur de charge inductif (18) pour un système de batterie est intégré dans l'unité structurale (15), dans laquelle l'électronique de puissance est connectée électriquement au récepteur de charge inductif (18) et adaptée pour redresser une tension alternative pouvant être induite dans le récepteur de charge inductif.

2. Unité d'entraînement d'essieu selon la revendication 1,
**caractérisée en ce que**
l'unité structurale (15) présente un boîtier commun (19).

3. Unité d'entraînement d'essieu selon la revendication 2,
**caractérisée en ce que**
le récepteur de charge inductif présente au moins une bobine qui est agencée au niveau de la face inférieure et à l'intérieur du boîtier.

4. Unité d'entraînement d'essieu selon la revendication 3,
**caractérisée en ce que**
au moins une partie de la face inférieure de boîtier, au-dessus de laquelle est disposée la au moins une bobine, est réalisée sous la forme d'un élément de guidage de champ pour des champs alternatifs magnétiques.

5. Unité d'entraînement d'essieu selon la revendication 3 ou 4,
**caractérisée en ce que**
au moins une partie de la face inférieure de boîtier, au-dessus de laquelle est agencée la au moins une bobine, est réalisée en forme de parasol et est en particulier concave.

6. Unité d'entraînement d'essieu selon l'une quelconque des revendications 3 à 5, **caractérisée en ce que**
au moins une partie de la face inférieure de boîtier, au-dessus de laquelle est agencée la au moins une bobine, est constituée d'un alliage d'aluminium contenant 40 % de ferrite en volume.

7. Unité d'entraînement d'essieu selon l'une quelconque des revendications précédentes
**caractérisée en ce que**
le récepteur de charge inductif (18) est adapté à des champs magnétiques alternatifs dans la plage de fréquence d'au moins 10 kHz, en particulier 80 kHz ou 140 kHz.

8. Unité d'entraînement d'essieu selon l'une quelconque des revendications précédentes
**caractérisée en ce que**
le moteur électrique (10, 11) et le récepteur de charge inductif (18) sont refroidis par du liquide et l'unité d'entraînement d'essieu présente un dispositif d'alimentation en liquide de refroidissement du moteur électrique (10, 11) et du récepteur de charge inductif (18).

9. Unité d'entraînement d'essieu selon la revendication 8 et en particulier la revendication 2
**caractérisée en ce que**
l'unité structurale, en particulier le boîtier (19), présente des raccords pour relier le dispositif d'alimentation en liquide de refroidissement à un circuit externe de liquide de refroidissement ou à un circuit interne de liquide de refroidissement.

10. Unité d'entraînement d'essieu selon l'une quelconque des revendications précédentes,
**caractérisée en ce que**
l'électronique de puissance est adaptée en mode de conduite en tant qu'onduleur entre le système de batterie et le moteur électrique (10, 11) et en mode de charge en tant que redresseur entre le récepteur de charge inductif (18) et le système de batterie.

11. Unité d'entraînement d'essieu selon l'une quelconque des revendications précédentes,
**caractérisée en ce que**
l'électronique de puissance présente un convertisseur haute tension/basse tension CC/CC pour l'alimentation en énergie basse tension d'un réseau de bord de véhicule.

12. Essieu moteur pour un véhicule à moteur comprenant une unité d'entraînement d'essieu selon l'une quelconque des revendications précédentes.

13. Véhicule à moteur comprenant une unité d'entraînement d'essieu selon l'une quelconque des revendications précédentes.
